# EUROPÄISCHE PATENTSCHRIFT

(11) **EP 2 028 913 B1**
(45) Veröffentlichungstag und Bekanntmachung des Hinweises auf die Patenterteilung: **29.04.2015**
(21) Anmeldenummer: 08158733.9
(22) Anmeldetag: 23.06.2008
(51) Int. Cl.: H05B 33/02

(54) **Beleuchtungsanordnung mit Lichtquelle und Sensor zum Erfassen des von der Lichtquelle abgegebenen Lichts**
Lighting assembly with light source and sensor for capturing light given off by the light source
Agencement d'éclairage doté d'une source lumineuse et capteur destiné à la saisie de la lumière émise par la source lumineuse

(30) Priorität: 21.08.2007 DE 102007039388
(43) Veröffentlichungstag der Anmeldung: 25.02.2009
(73) Patentinhaber: Zumtobel Lighting GmbH, 6850 Dornbirn (AT)
(72) Erfinder: Keller, Katharina, 88131 Lindau (DE)
(74) Vertreter: Thun, Clemens

(56) Entgegenhaltungen:
- EP-A2- 0 420 644
- WO-A-00/37904
- WO-A-2004/057922
- WO-A-2004/057923
- WO-A-2007/019663
- WO-A1-01/38857
- WO-A1-2006/099732
- DE-A1- 10 315 268
- US-A1- 2003 047 736
- US-A1- 2004 031 965
- US-A1- 2005 056 859
- US-B1- 6 639 350

## Beschreibung

Die vorliegende Erfindung betrifft eine Beleuchtungsanordnung gemäß dem Oberbegriff des Anspruchs 1, welche mindestens eine Lichtquelle, einen Sensor zum Erfassen des von der Lichtquelle abgegebenen Lichts sowie eine Steuereinrichtung aufweist, welche zum Ansteuern der Lichtquelle in Abhängigkeit von Informationen ausgebildet ist, die durch den Sensor übermittelt werden. Insbesondere betrifft die vorliegende Erfindung eine LED-Leuchte, welche gemäß dem Prinzip des sog. FeedBack-Loop arbeitet.

Der Einsatz von LEDs bzw. allgemein von lichtemittierenden Halbleiterelementen in der Beleuchtungstechnik hat in jüngster Zeit deutlich zugenommen, da mittlerweile die Lichtleistungen, die mit derartigen Lichtquellen erzielt werden können, auch für größere Beleuchtungsanwendungen ausreichend hoch sind. Ein Vorteil der LEDs besteht hierbei in deren Effizienz sowie der Möglichkeit, durch entsprechende Mischung verschiedener Farben Licht in nahezu jedem gewünschten Farbton erzielen zu können.

Eine Problematik derartiger LED-Leuchten, die mit mehreren verschiedenfarbigen LEDs ausgerüstet sind, besteht allerdings darin, dass diese Leuchten ohne weitere Regelung oder Steuerung aufgrund von thermischen Einflüssen oder Alterungseinflüssen nicht farbortstabil sind. Ferner können auch herstellungsbedingt Abweichungen in der Lichtabgabe vorliegen. Dies bedeutet, dass ohne eine genaue Kontrolle bei der Ansteuerung des LEDs die Gefahr besteht, das letztendlich der Farbton des abgegebenen Lichts nicht dem Wunsch des Anwenders entspricht.

Es ist dementsprechend bekannt, das LED-Licht gemeinsam oder im Hinblick auf jede Farbe einzeln zu messen und dann eine auf das Messergebnis abgestimmte Regelung bei der Ansteuerung der LEDs vorzunehmen. Insbesondere wird der den LEDs zugeführte Strom derart eingestellt, dass letztendlich der gewünschte Farbort des abgegebenen (Misch-)Lichts stabil eingehalten werden kann. Das Prinzip einer derartigen Regelung ist bspw. in der WO 2004/057922 A1 oder WO 2004/057923 A1 beschrieben.

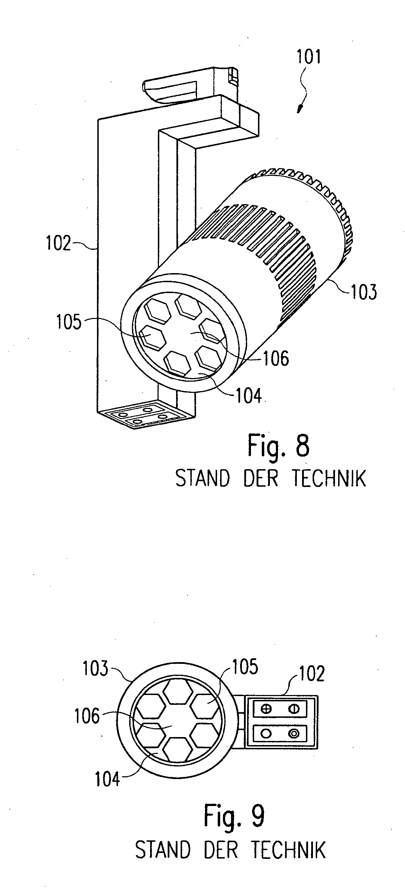

Die Figuren 8 und 9 zeigen zwei Ansichten einer aus dem Stand der Technik bekannten LED-Leuchte, wie sie von der Anmelderin vertrieben wird und welche nach diesem Prinzip arbeitet. Diese LED-Leuchte 101 weist zum einen ein längliches Halterungsmodul 102 auf, das zur Halterung der Leuchte 101 bspw. in einer Stromschiene genutzt werden kann und welches ferner Komponenten zur Stromversorgung der in einem zylinderförmigen Strahlergehäuse 103 angeordneten Lichtquellen (nicht dargestellt) aufweist. Am vorderen Ende des Strahlergehäuses 103 ist eine Lichtaustrittsöffnung 104 gebildet, über die das Licht der in dem Strahlergehäuse 103 angeordneten verschiedenfarbigen LEDs abgegeben wird. Genaugenommen erfolgt die Lichtabgabe durch über den Umfang der Lichtaustrittsöffnung verteilt angeordneten sechseckige Segmente 105. Das Zentrum der Lichtaustrittsöffnung 104 ist hingegen lichtundurchlässig ausgebildet, da dieses dazu genutzt wird, das von den LEDs abgegebene Licht teilweise zurückzureflektieren. Dieses fällt dann auf einen Sensor, der im Zentrum der LEDs angeordnet ist. Die von dem Sensor gelieferten Informationen werden dann in der oben beschriebenen. Weise bei der Ansteuerung der LEDs genutzt.

Die in den Fig. 8 und 9 dargestellte Lösung hat sich zwar bewährt und ermöglicht eine effektive und genaue Steuerung der Farbe des von der Leuchte 101 abgegebenen Lichts, der optische Pfad allerdings, über den das Licht zu dem Sensor zurückgeleitet wird, ist ein Verlustpfad, d.h. das auf diesem Wege erfasste Licht kann nicht zu dem gewünschten Beleuchtungszweck eingesetzt werden.

Eine alternative Lösung zur Erfassung des LED-Lichts ist ferner in der EP 1 056 993 B1 dargestellt, auch hier wird allerdings das eigentlich zur Lichtabgabe bzw. Beleuchtung vorgesehene Licht zumindest teilweise über einen Lichtleiter zurück zu einem Sensor geführt, was wiederum zu einer Reduzierung der Beleuchtungsleistung führt.

Grundsätzlich gesehen sollte also möglichst wenig Licht auf den Sensor gelenkt werden, auf der anderen Seite ist für eine genaue Farbsteuerung allerdings zwingend erforderlich, dass möglichst das Licht aller Lichtquellen bzw. LEDs auf den Sensor fällt, so dass ein fehlerhaftes bzw. ein von den weiteren LEDs abweichendes Verhalten einer einzelnen LED zuverlässig detektiert werden kann.

Aus der US 2004/0031965 A1 ist eine organische LED (OLED) mit einem dazugehörigen Fotodetektor bekannt, der zur Erfassung des von der OLED abgestrahlten Lichts dient. Die Anordnung kann beispielswiese bei Bildschirmen zum Einsatz kommen.

Aus der US 2003/0047736 A1 ist ein Licht abstrahlendes System bekannt, bei dem das von einer LED abgegebene Licht zunächst mit einem Lichtsensor erfasst und anschließend in Abhängigkeit hiervon angepasst wird.

In der WO 2007/019663 A1 ist ein digital gesteuertes Beleuchtungssystem beschrieben, bei dem mehrere Sensoren jeweils zur Erfassung von Licht einer bestimmten LED vorgesehen sind.

Der vorliegenden Erfindung liegt dementsprechend die Aufgabe zugrunde, eine gegenüber dem Stand der Technik verbesserte Möglichkeit anzugeben, einerseits die Erfassung bzw. Bewertung des abgegebenen Lichts zu verbessern und andererseits auch die Möglichkeit zu eröffnen, das von den Lichtquellen abgegebene Licht möglichst effektiv für die Beleuchtung nutzen zu können.

Die Aufgabe wird durch eine Beleuchtungsanordnung, welche die Merkmale des Anspruchs 1 aufweist, gelöst. Vorteilhafte Weiterbildungen sind Gegenstand der abhängigen Ansprüche.

Die erfindungsgemäße Lösung beruht auf dem Gedanken, einen Sensor einzusetzen, der im wesentlichen transparent bzw. lichtdurchlässig ausgebildet und unmittelbar in dem für die Lichtabgabe vorgesehenen Strahlengang bzw. Lichtweg angeordnet ist. Aufgrund der Transparenz besteht die Möglichkeit, den Sensor derart zu gestalten, das er einen großen Teil oder sogar die gesamte Fläche einer Lichtaustrittsöffnung einer Leuchte ausfüllt. Auf diesem Wege kann in einfacher und zuverlässiger Weise das von der bzw. den Lichtquelle(n) abgegebene Licht erfasst und bewertet werden, ohne dass an einer anderen Stelle Licht aus dem optischen Pfad auf einen Sensor abgezweigt werden müsste. Diese Lösung erlaubt dementsprechend einerseits eine noch genauere Erfassung des von der bzw. den Lichtquelle(n) abgegebenen Lichts, auf der anderen Seite besteht die Möglichkeit einer Lichtabgabe über die gesamte Fläche hinweg, wobei das von der bzw. den Lichtquelle(n) abgegebene Licht nahezu vollständig zu dem gewünschten Beleuchtungszweck eingesetzt werden kann.

Erfindungsgemäß wird dementsprechend eine Beleuchtungsanordnung vorgeschlagen, welche mindestens eine Lichtquelle, einen Sensor zum Erfassen des von der Lichtquelle abgegebenen Lichts sowie eine Steuereinrichtung zum Ansteuern der Lichtquelle in Abhängigkeit von durch den Sensor übermittelte Informationen aufweist, wobei erfindungsgemäß vorgesehen ist, dass der Sensor im zur Lichtabgabe vorgesehenen Strahlengang der Beleuchtungsanordnung, insbesondere im Bereich einer Lichtaustrittsöffnung der Beleuchtungsanordnung angeordnet ist und wobei der Sensor flächig und im wesentlichen lichtdurchlässig ausgebildet ist.

Die erfindungsgemäße lichtdurchlässige Ausgestaltung des Sensors kann in vorteilhafter Weise dadurch erzielt werden, dass dieser als flächige Fotodiode ausgestaltet ist. Der Sensor arbeitet dementsprechend gemäß dem Prinzip einer Fotodiode bzw. transparenten Solarzelle und weist hierzu bspw. eine Halbleiteranordnung auf, welche einen pn-Übergang bildet, in dem ein äußerst geringfügiger Anteil des durch den Sensor hindurchtretenden Lichts durch die Erzeugung von entsprechenden Ladungsträgern ein der Lichtstärke entsprechendes Signal generiert. Der Sensor ist in diesem Fall also äußerst dünn ausgebildet und dementsprechend in vorteilhafter Weise auf einem Trägerelement angeordnet, wobei dieses bspw. durch ein optisches Element oder System der Beleuchtungsanordnung zur Beeinflussung der Lichtabgabe gebildet sein kann. Dieses kann bspw. dazu genutzt werden, das von verschiedenfarbigen LEDs bzw. allgemein verschiedenfarbigen Lichtquellen abgegebene Licht zu mischen, um bspw. Weißlicht oder auch Licht in einer gewünschten Mischfarbe zu erzielen. Dem Sensor kann ergänzend hierzu allerdings auch ein weiteres Lichtbeeinflussungselement nachgeordnet sein, mit dem bspw. dann das Licht in einen gewünschten Bereich gelenkt bzw. blendfrei abgegeben wird.

Vorzugsweise weist die Beleuchtungsanordnung mehrere Lichtquellen auf, welche Licht in unterschiedlichen Farben abgegeben. In diesem Fall kann dann bspw. ein einzelner großflächiger Sensor genutzt werden, um bei einer alternierenden Ansteuerung der einzelnen Farben diese jeweils individuell zu bewerten. Es wäre alternativ hierzu allerdings auch denkbar, den Sensor in mehrere Bereiche bzw. Segmente zu unterteilen, welche jeweils für die Erfassung und Bewertung von Licht einer bestimmten Farbe ausgebildet sind. Auf diesem Wege kann während des laufenden Betriebs der Beleuchtungsanordnung das von den Lichtquellen abgegebene Licht in zuverlässiger Weise erfasst und bewertet werden, um eine gewünschte Farbsteuerung zu erzielen.

Als Lichtquellen werden bevorzugt LEDs eingesetzt. Die vorliegende Erfindung wäre allerdings auch unter Verwendung anderer Lichtquellen denkbar. Insbesondere wäre auch der Einsatz sog. organischer LEDs möglich.

Nachfolgend soll die Erfindung anhand der beiliegenden Zeichnung näher erläutert werden. Es zeigen:
- Fig. 1 bis 3: verschiedene Ansichten eines Ausführungsbeispiels einer erfindungsgemäßen Beleuchtungsanordnung in Form eines LED-Strahlers;
- Fig. 4: eine schematische Darstellung der wesentlichen Komponenten für die Lichtabgabe und Farbsteuerung der erfindungsgemäßen Beleuchtungsanordnung;
- Fig. 5: die Anordnung eines erfindungsgemäßen Sensors auf einem scheibenförmigen Trägerelement;
- Fig. 6: eine erste Variante zur Ausgestaltung eines erfindungsgemäßen Sensors;
- Fig. 7: eine zweite Variante zur Ausgestaltung eines erfindungsgemäßen Sensors und
- Fig. 8 und 9: die Ansichten eines aus dem Stand der Technik bekannten LED-Strahlers.

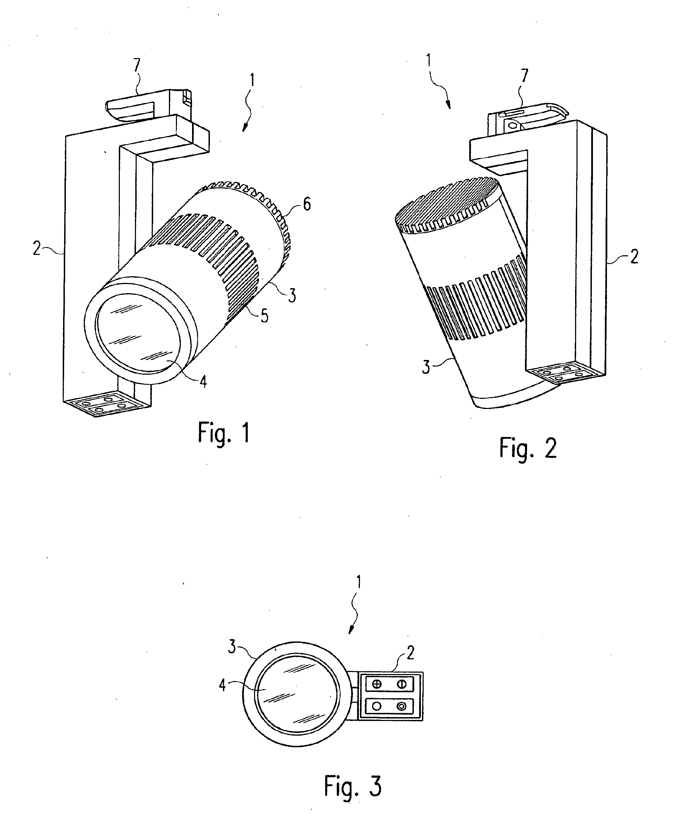

Die in den Fig. 1 bis 3 dargestellte erfindungsgemäße LED-Strahlerleuchte ähnelt in ihrem äußeren Aufbau in weiten Teilen der in den Fig. 8 und 9 dargestellten Leuchte aus dem Stand der Technik. Wiederum weist die allgemein mit dem Bezugszeichen 1 versehene Leuchte ein Montage- bzw. Halterungsmodul 2 auf, an dem ein zylinderförmiges Strahlergehäuse 3 befestigt ist. Das Strahlergehäuse 3 ist dabei vorzugsweise über ein nicht näher dargestelltes Gelenk mit dem Halterungsmodul 2 verbunden, so dass der Strahler 3 in gewünschter Weise verschwenkt bzw. ausgerichtet werden kann. An der Oberseite des Halterungsmoduls 2 befinden sich Kontaktelemente 7, welche ein Anordnen sowie eine elektrische Kontaktierung der Leuchte 1 an einer Stromschiene ermöglichen.

Das Strahlergehäuse 3 weist an seinem vorderen Ende eine kreisförmige Öffnung auf, welche eine Lichtaustrittsöffnung 4 zur Lichtabgabe bildet. Innerhalb des Gehäuses 3 sind Lichtquellen in Form von LEDs angeordnet, deren Licht über diese Lichtaustrittsöffnung 4 abgegeben wird. Die hierbei entstehende Verlustwärme wird über Lüftungsschlitze 5 und 6 im seitlichen Wandbereich des Gehäuses 3 sowie an dessen Rückseite abgeführt.

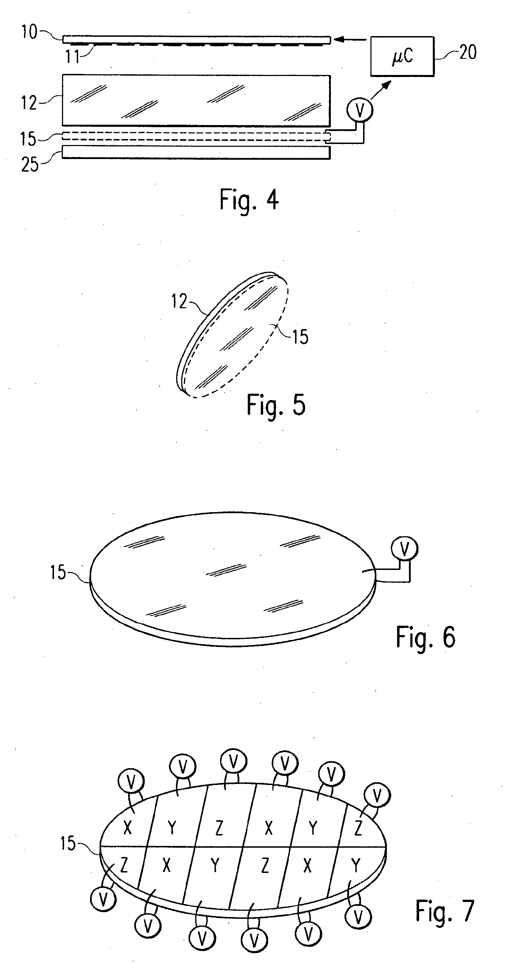

Ein wesentliches äußerliches Merkmal, durch das sich die erfindungsgemäße Leuchte 1 von dem bekannten LED-Strahler der Figuren 8 und 9 unterscheidet, besteht darin, dass die gesamte kreisförmige Lichtaustrittsöffnung 4 an der Vorderseite des Gehäuses 3 zur Lichtabgabe genutzt werden kann. Hierzu ist ein besonderer Aufbau der für die Lichtabgabe sowie für die Farbsteuerung verantwortlichen Komponenten vorgesehen, der nunmehr näher anhand der Fig. 4 bis 7 erläutert werden soll.

Fig. 4 zeigt dabei zunächst eine schematische Anordnung der verschiedenen Komponenten für die Lichtabgabe und Farbsteuerung, wobei ein erstes wesentliches Element hierfür zunächst ein LED-Modul 10 in Form einer Leiterplatte ist, auf der mehrere lichtemittierende Halbleiterelemente bzw. LEDs 11 angeordnet sind. Die LEDs 11 sind im vorliegenden Fall vorzugsweise entsprechend der Chip-on-Board-Technologie, also ungehäust auf der Leiterplatte 10 montiert, um eine möglichst großflächige Anordnung zur Lichtabgabe zu bilden. Hierbei kann insbesondere vorgesehen sein, dass verschiedenfarbige LEDs eingesetzt werden, die bspw. Licht in den Farben Rot, Grün und Blau emittieren, wobei dann durch eine entsprechende Ansteuerung der verschiedenen Farben Licht einer gewünschten Mischfarbe, u.a. auch Weißlicht generiert werden kann.

Die angesprochene Lichtmischung wird vorzugsweise dadurch begünstigt, dass dem LED-Modul 10 zunächst ein erstes optisches System bzw. ein optisches Element 12 nachgeordnet ist, das die Durchmischung bewirkt. Es kann sich hierbei um eine transparente Scheibe handeln, welche beispielsweise lichtstreuende Partikel aufweist. Effizienter durchmischen das Licht beispielsweise Linsenarrays oder quaderförmige Stäbe, die ebenso im Rahmen der Erfindung eingesetzt werden können.

Diesem ersten optischen Element 12 nachgeordnet befindet sich im Strahlengang bzw. im Lichtweg der Beleuchtungsanordnung 1 ein Sensor 15, der flächig ausgestaltet ist und - wie später noch näher erläutert wird - vorzugsweise an der Oberfläche des optischen Elements 12 angeordnet ist. Der Sensor 15 ist transparent bzw. im wesentlichen vollständig lichtdurchlässig ausgebildet und dient dazu, das durch ihn hindurchtretende Licht, welches von den LEDs 11 stammt, zu erfassen. Er ist gemäß einem bevorzugten Ausführungsbeispiel in Form einer Fotodiode ausgebildet, wobei beim Durchtritt des Lichts ein entsprechendes Spannungssignal erzeugt wird, das von dem Sensor an eine Steuereinrichtung 20 übermittelt wird.

Die von dem Sensor 15 der Steuereinrichtung 20 zugeführten Informationen geben über die Intensität des von den LEDs 11 abgegebenen Lichts Auskunft. Die Steuereinrichtung 20 verwertet nunmehr diese Informationen und steuert die LEDs 11 in geeigneter Weise an, um Alterungserscheinungen oder Veränderungen in der Intensität entgegen zu wirken. Abweichungen in der gewünschten Intensität können auf diesem Wege für die einzelnen Farben dadurch kompensiert werden, dass die jeweiligen LEDs 11 mit einer geeigneten Leistung betrieben werden. Durch diese Feedback-Schleife wird sichergestellt, dass das von der Beleuchtungsanordnung 1 insgesamt abgegebene Licht dauerhaft die gewünschte Intensität sowie den gewünschten Farbton aufweist.

Als weitere Ergänzung kann dem Sensor 15 nachgeordnet noch ein weiteres optisches Element bzw. ein Lichtbeeinflussungselement 25 vorgesehen sein, mit dem die Lichtabgabe in gewünschter Weise beeinflusst werden kann. Hierbei kann bspw. noch eine zusätzliche Vermischung des Lichts erzielt werden. Alternativ dazu wäre es allerdings auch denkbar, dieses Lichtbeeinflussungselement 25 bspw. durch den Einsatz einer entsprechenden Prismenstruktur derart auszugestalten, dass das Licht lediglich in einem gewünschten Winkelbereich abgestrahlt wird.

Fig. 5 zeigt in schematischer Ansicht die Ausgestaltung des optischen Elements 12, welches wie bereits erwähnt bspw. durch eine transparente lichtstreuende Scheibe ausgestaltet sein kann. An der Oberfläche befindet sich der flächige und äußerst dünne Sensor 15, der lichtdurchlässig ausgestaltet ist. Wie bereits erwähnt wurde ist der Sensor 15 in vorteilhafter Weise entsprechend einer transparenten Solarzelle bzw. einer Fotodiode ausgebildet. Er besteht dementsprechend aus mehreren übereinanderliegenden Halbleiterschichten, die in Zusammenwirkung bspw. einen pn-Übergang bilden. Beim Durchtritt des von den LEDs 11 abgegebenen Lichts durch diese Halbleiterschichten werden Ladungsträger erzeugt, die letztendlich zu einem Spannungssignal führen, das Auskunft über die Intensität des Lichts gibt. Die Scheibe 12 dient in diesem Fall als Trägerplatte für den lediglich wenige Nanometer dicken Sensor 15, wobei zusätzlich die Möglichkeit bestehen würde, diese mit Anti-Reflexschichten zu versehen, um nahezu das gesamte von in den LEDs 11 abgegebene Licht für die Beleuchtungszwecke nutzen zu können.

Hinsichtlich der Ausgestaltung des Sensors bestehen mehrere Möglichkeiten, die in den Fig. 6 und 7 dargestellt sind.

Fig. 6 zeigt eine erste Variante des Sensors 15, bei der dieser einheitlich ausgebildet ist bzw. ein einziges, die gesamte Fläche übergreifendes Sensorfeld aufweist. Dies bedeutet, dass unabhängig davon, an welcher Stelle Licht durch den Sensor 15 hindurchtritt, dieses in gleicher Weise zu der das Ausgangssignal des Sensors 15 bildenden Spannung beiträgt. Der Sensor 15 in dieser Variante dient also zur Erfassung der Gesamtintensität des von allen LEDs 11 abgegebenen Lichts. Er könnte bspw. in einem Fall eingesetzt werden, in dem lediglich LEDs einer bestimmten Farbe verwendet werden, wobei dann mit Hilfe des Sensorsignals eine Nachregelung der LED-Leistung derart erfolgt, das grundsätzlich die gleiche bzw. die gewünschte Lichtintensität erzielt wird.

Auch eine Verwendung dieses Sensors zur Regelung der Farbe bei der Generierung von Mischfarben wäre denkbar, wobei in diesem Fall dann eine geeignete Ansteuerung der LEDs 11 und entsprechende Bewertung der von dem Sensor 15 gelieferten Signale erforderlich ist. Hierbei könnte bspw. auf die in der WO 2004/057922 A1 bzw. WO 2004/057923 A1 beschriebene Vorgehensweise zurückgegriffen werden. Bei diesem bekannten Verfahren werden während des Betriebs kurzfristig einige der LEDs deaktiviert, so dass nur noch die LEDs einer bestimmten Farbe Licht abgeben. Das während diesem Messzeitraum erhaltene Signal gibt also dann Auskunft über die Intensität des von den entsprechenden LEDs emittierten Lichts. Nacheinander werden dann sämtliche Farben der verschiedenen LEDs bewertet, wobei dann aus der Gesamtinformation hieraus eine entsprechende Ansteuerung der LEDs stattfinden kann. Die einzelnen Messzeiträume für die jeweils einzelnen Farben sind dabei derart kurz, dass die kurzfristig auftretenden Farbveränderungen für einen Betrachter in der Regel nicht erkennbar sind.

Eine alternative Möglichkeit zur Ausgestaltung des Sensors 15, bei der eine entsprechende kurzfristige individuelle Farbansteuerung nicht erforderlich ist, ist in Fig. 7 dargestellt. Hier ist die Sensorfläche in mehrere Bereiche bzw. Segmente unterteilt, welche jeweils zur Erfassung und Bewertung einer bestimmten Farbe X, Y, Z vorgesehen sind. Dies kann dadurch erreicht werden, dass auf einzelne Bereiche des Sensors partiell Filter aufgedampft sind, durch die eine Bewertung einer bestimmten Farbe bevorzugt wird. Diese Bereiche sollten dabei möglichst gleichmäßig über die Fläche des Sensors 15 verteilt angeordnet werden, wobei dann das jeweils einzelne Spannungssignal Auskunft über die in diesem Bereich auftreffende Farbe gibt. Der Vorteil dieser Ausgestaltung in Fig. 7 besteht darin, dass die verschiedenen Farben gleichzeitig bzw. simultan ausgewertet werden können, so das nicht das sequentielle Schalten der Farben wie im Zusammenhang mit Fig.6 beschrieben erforderlich ist. Allerdings ist der Aufwand zur Realisierung des Sensors gemäß Fig. 7 etwas höher.

Letztendlich besteht der Vorteil der erfindungsgemäßen Lösung darin, dass unabhängig von der Ausgestaltung des Sensors die Möglichkeit besteht, nahezu das vollständige LED-Licht zu dem gewünschten Beleuchtungszweck einzusetzen. Hierbei wird insbesondere auch eine über die gesamte Fläche der Lichtaustrittsöffnung mögliche Lichtabgabe geschaffen, was zu weiteren Vorteilen hinsichtlich der lichttechnischen Eigenschaften der erfindungsgemäßen Beleuchtungsanordnung führt. Trotz allem ist eine zuverlässige Erfassung und Bewertung des Lichts sichergestellt, so dass die gewünschte Farb- und Helligkeitssteuerung erzielt werden kann.

Wie bereits erwähnt wurde, eignet sich die Erfindung insbesondere bei der Verwendung von LEDs bzw. lichtemittierenden Halbleiterelementen als Lichtquellen. Grundsätzlich besteht allerdings die Möglichkeit des Einsatzes dieser erfindungsgemäßen Sensoren immer dann, wenn im Rahmen einer Regelung die Helligkeit und/oder Farbe des von einer Leuchte abgegebenen Lichts genau eingestellt werden soll. Denkbar wäre insbesondere auch die Verwendung von organischen LEDs als Lichtquellen, wobei ein besonderer Vorteil hier darin bestehen würde, dass derartige organische LEDs üblicherweise ohnehin Glasplatten als Träger verwenden, wobei diese dann gleichzeitig auch als Träger für den Sensor genutzt werden könnten.

## Patentansprüche

1. Beleuchtungsanordnung (1) mit
• mindestens zwei Lichtquellen (11),
• einem Sensor (15) zum Erfassen des von den Lichtquellen (11) abgegebenen Lichts sowie
• einer Steuereinrichtung (20) zum Ansteuern der Lichtquellen (11) in Abhängigkeit von durch den Sensor (15) übermittelten Informationen,
wobei der Sensor (15) in einem zur Lichtabgabe vorgesehenen Strahlengang der Beleuchtungsanordnung (1) angeordnet ist und
wobei der Sensor (15) flächig und im Wesentlichen lichtdurchlässig ausgebildet ist, **dadurch gekennzeichnet,**
**dass** die Beleuchtungsanordnung (1) eine transparente lichtstreuende Scheibe (12) aufweist, die eine Durchmischung des von den Lichtquellen (11) abgegebenen Lichts bewirkt,
und **dass** der Sensor (15) auf der den Lichtquellen abgewandten Seite der transparenten lichtstreuenden Scheibe (12) angeordnet ist und dazu dient, das durch ihn hindurchtretende Licht zu erfassen,
wobei der Sensor (15) als flächige Photodiode oder transparente Solarzelle ausgestaltet ist und den Strahlengang der Beleuchtungsanordnung (1) vollständig ausfüllt.

2. Beleuchtungsanordnung nach Anspruch 1,
**dadurch gekennzeichnet,**
**dass** der Sensor (15) im Bereich einer Lichtaustrittsöffnung (4) der Beleuchtungsanordnung (1) angeordnet ist.

3. Beleuchtungsanordnung nach Anspruch 1 oder 2,
**dadurch gekennzeichnet,**
**dass** dem Sensor (15) ein Lichtbeeinflussungselement (25) nachgeordnet ist.

4. Beleuchtungsanordnung nach einem der vorherigen Ansprüche,
**dadurch gekennzeichnet,**
**dass** diese mehrere Lichtquellen (11) aufweist, welche Licht unterschiedlicher Farbe abgeben.

5. Beleuchtungsanordnung nach Anspruch 4,
**dadurch gekennzeichnet,**
**dass** der Sensor (15) in mehrere Bereiche mit partiell aufgedampften Filtern unterteilt ist, welche jeweils zur Erfassung von Licht einer bestimmten Farbe ausgebildet sind, wobei durch die Filter eine Bewertung einer bestimmten Farbe bevorzugt wird.

6. Beleuchtungsanordnung nach einem der vorherigen Ansprüche,
**dadurch gekennzeichnet,**
**dass** die Lichtquelle(n) durch LEDs gebildet sind.

7. Beleuchtungsanordnung nach einem der Ansprüche 1 bis 5,
**dadurch gekennzeichnet,**
**dass** die Lichtquellen(n) durch organische LEDs gebildet sind.

## Claims

1. Lighting arrangement (1) with
a t least two light sources (11),
a sensor (15) for detecting from the light sources (11) the emitted light as well as
a control device (20) for driving the light sources (11) depending on(15) information transmitted by the sensor,
whereby the sensor (15) is arranged to receive the light output beam path of the lighting device (1) and
whereby the sensor (15) is formed substantially flat and translucent,
**characterised by** the fact
that the illumination device (1) comprises a transparent light diffusing plate (12), which causes a mixing of the vlm of the light sources (11) emitted light,
and that the sensor (15) is arranged on the side facing away from the light sources of the transparent light diffusing plate disc (12) and serves to detect the light passing through it,
whereby the sensor (15) is designed as a flat photodiode or transparent solar cell, and the fills completely the beam path of the lighting device (1).

2. Lighting device according to claim 1,
**characterised by** the fact
that the sensor (15) is arranged in the area of a light exit opening (4) of the lighting device (1).

3. Lighting device according to claim 1 or 2,
**characterised by** the fact
that the sensor (15) is subordinate to a light-influencing element (25).

4. Lighting device according to one of the preceding claims,
**characterised by** the fact
that these multiple light sources (11) comprise of emitted light of different colours.

5. Lighting device according to claim 4,
**characterised by** the fact
that the sensor (15) is divided into several areas with partially vapor-deposited filters which are each configured to detect light of a certain colour, whereby through the filter an evaluation of a particular colour is preferred.

6. Lighting arrangement according to one of the preceding claims,
**characterised by** the fact
that the light source (s) are formed by LEDs.

7. Lighting arrangement according to one of claims 1 to 5,
**characterised by** the fact
that the light sources (n) are formed by organic LEDs.

## Revendications

1. Dispositif d'éclairage (1) avec
• au moins deux sources de lumière (11),
• un capteur (15) destiné à détecter la lumière émise par les sources de lumière (11) et
• un dispositif de commande (20) pour entraîner les informations transmises par le capteur (15) sur les sources de lumière (11),
dans lequel le capteur (15) est disposé dans un trajet destiné à l'agencement d'éclairage (1) du faisceau de sortie de lumière et
dans lequel le capteur (15) est sensiblement plat et translucide,
**caractérisé en ce**
**que** le dispositif d'éclairage (1) comprend une plaque de diffusion de lumière transparente (12), ce qui provoque un mélange de la vlm et des sources de lumière (11) qui émettent la lumière,
et **que** le capteur (15) est disposé sur le côté opposé aux sources de lumière du verre diffuseur transparent (12) et sert à détecter la lumière passant à travers lui,
dans lequel le capteur (15) est réalisé sous la forme d'une photodiode planaire ou cellule solaire transparente, que le trajet de faisceau du dispositif d'éclairage (1) remplit complètement.

2. Dispositif d'éclairage selon la revendication 1,
**caractérisé en ce**
**que** le capteur (15) est disposé dans la zone d'ouverture de sortie de lumière (4) du dispositif d'éclairage (1).

3. Dispositif d'éclairage selon la revendication 1 ou 2,
**caractérisé en ce**
**que** le capteur (15) est un élément influençant la lumière (25) agencé en aval.

4. Dispositif d'éclairage selon l'une des revendications précédentes,
**caractérisé en ce**
**que** ces multiples sources de lumière (11), émettent une lumière de différentes couleurs.

5. Dispositif d'éclairage selon la revendication 4,
**caractérisé en ce**
**que** le capteur (15) est divisé en plusieurs zones avec des filtres partiellement déposés en phase vapeur qui sont configurés pour détecter la lumière d'une certaine couleur, dans lequel le filtre a une côte d'une couleur particulière qui est préférée.

6. Dispositif d'éclairage selon l'une des revendications précédentes,
**caractérisé en ce**
**que** la source de lumière est formée par des LED.

7. Dispositif d'éclairage selon l'une des revendications 1 à 5,
**caractérisé en ce**
**que** les sources lumineuses (n) sont formés par des LED organiques.
